Europäisches Patentamt

European Patent Office

Office européen des brevets

(11) Publication number : **0 470 728 A1**

# (12) EUROPEAN PATENT APPLICATION

(21) Application number : **91306749.2**

(22) Date of filing : **24.07.91**

(51) Int. Cl.[5] : **B01D 53/36,** B01J 27/051, B01J 23/00

(30) Priority : **07.08.90 JP 209626/90**

(43) Date of publication of application :
**12.02.92 Bulletin 92/07**

(84) Designated Contracting States :
**DE FR GB**

(71) Applicant : **TAKUMA CO., LTD.**
**3-23, Dojima Hama 1-chome**
**Kita-ku Osaka (JP)**
Applicant : **TAKUMA RESEARCH AND**
**DEVELOPMENT CO., LTD.**
**3-23 Dojima Hama 1-Chome**
**Kita-Ku Osaka (JP)**

(72) Inventor : **Wakihara, Masataka**
**17-6 Sakuradai, Midori-ku**
**Yokohama-shi, Kanagawa-ken (JP)**
Inventor : **Chiba, Yoshikazu, c/o Takuma Co.**
**Ltd.**
**3-23 Dojima Hama 1-chome**
**Kita-ku, Osaka (JP)**
Inventor : **Nishikawa, Yuji, c/o Takuma**
**Research and**
**Development Co. Ltd. 3-23 Dojima Hama**
**1-chome**
**Kita-ku, Osaka (JP)**

(74) Representative : **Daley, Michael John et al**
**F.J. CLEVELAND & COMPANY 40/43 Chancery**
**Lane**
**London, WC2A 1JQ (GB)**

(54) **Methods for lowering the nitrogen oxides content of exhaust gases.**

(57) Catalytic cracking or selective contact reduction of $NO_x$ in exhaust gases is improved in these known processes by use of a Chevrel phase compound as the catalyst. The catalytic compounds have the formula $M_x Mo_6 S_{8-y}$ and/or $M_x Mo_6 S_{8-y} O_z$, where M is metal, S is chalcogen, O is oxygen, x is 1-5, 8-y is 7.4-8.5 and z is from 2 to 8.

EP 0 470 728 A1

The present invention relates to improvements in processes for lowering the nitrogen oxides content of exhaust gases, and especially to improvements in the so-called catalytic cracking method and the so-called selective contact reduction method. More particularly, the present invention relates to such methods where nitrogen oxides are effectively removed from exhaust gases over long periods of time without lowering the catalytic activity of the catalyst used in the methods. Even more particularly, by using Chevrel phase compounds as the catalyst for such methods, nitrogen oxides can be effectively lowered in a variety of exhaust gases, including those emitted from diesel engines, gas turbines, boilers, vehicles, nuclear reactors, incinerators, including refuse incinerators, and the like.

## BACKGROUND OF THE INVENTION

The usual methods for removing nitrogen oxides, especially nitrogen monoxide, contained in exhaust gases are generally divided into the so-called wet methods and the so-called dry methods. The wet methods involve treatment with alkali solutions, which requires subsequent treatment of the waste alkali solutions. As a result, the wet methods incur high costs for the treatment of the waste alkali solutions and experience operational and maintenance difficulties in such treatment facilities. On the other hand, since the dry methods do not produce the waste solutions, the operational and maintenance difficulties of subsequent treatment facilities are relatively low. Thus, the dry methods are advantageous in practical use.

For this reason, various dry methods have been provided by the art in recent years, such as (1) the co-called catalytic cracking method, using precious metals or copper ion exchange zeolites as catalyst, (2) the accelerated electron decomposition methods, using an electron beam, (3) the so-called selective contact reduction methods, using Pd-Pt-Rh tri-catalyst or $V_2O_5$-$TiO_2$-$WO_3$ catalyst, and (4) the adsorption methods, using adsorbents such as fused salts and the like.

Unfortunately, the accelerated electron decomposition methods require strict measures for dealing with leakage of secondary X-rays and, hence, the costs for building the facilities are high. As a result, it is difficult to apply these methods to large-sized treatment facilities.

The selective contact reduction methods using $V_2O_5$-$Tio_2$-$WO_3$ catalyst, involve high operational costs due to the necessity of strictly controlling the emission of non-reactive $NH_3$. Further, it is difficult to apply these methods to small-sized boilers and the like.

The selective contact reduction methods using Pd-Pt-Rh tri-catalyst is deficient in that catalyst does not have high activity for NO reduction, which results in the amount of nitrogen monoxide reduction being insufficient, especially when large amounts of oxygen are contained in the exhaust gases being treated, e.g. exhaust gases emitted from high powered and fuel efficient dilution combustion type engines.

While a new absorption method has recently been proposed, for instance, using $YBa_2Cu_3O_7$, this method has not reached the development stage where it can be put to practical use.

In the catalytic cracking method where precious metal catalysts are employed, the catalytic activity is lost within a short time period if the exhaust gases contain large amounts of soot, $NO_x$, $SO_x$ and the like, which is quite usual in exhaust from many engines, e.g. diesel engines. As a result, this method suffers in that nitrogen oxides cannot be sufficiently removed over long periods of time.

Similarly, the catalytic cracking method, using copper ion exchange zeolites (Cu-Z S M - 5) as catalyst, suffers in that the catalytic activity is greatly reduced in the presence of $O_2$, $H_2O$ and $SO_2$. Thus, this method has not reached the development stage for practical use.

Accordingly, it would be of substantial advantage to the art to provide methods of reducing nitrogen oxides in exhaust gases which do not suffer from the above-described disadvantages.

## BRIEF DESCRIPTION OF THE INVENTION

As noted above, a major difficulty with the conventional dry methods, e.g. the catalytic cracking methods and the selective contact reduction methods, is that the catalysts used for both methods cannot lower nitrogen oxides contents sufficiently for practical use, since the activity of the catalysts is substantially lowered in the significant presence of $O_2$, $H_2O$, $SO_2$, which very often are included in usual exhaust gases. The present invention, however, can substantially lower nitrogen oxides by use of these methods and over long time periods and without substantially lowering the catalytic activity of the present catalysts, even when the exhaust gases contain large amounts of $O_2$, $H_2O$, $SO_2$ and the like, and which in turn makes operational and maintenance facilities easy to operate.

The catalysts of the present invention have as the basic constituent a Chevrel phase compound $M_x Mo_6 S_{8-y}$ and/or $M_x Mo_6 S_{8-y} O_z$, where M is metal, S is chalcogen, O is oxygen, x is 1-5, 8-y is 7.4 to 8.5 and z is from 2 to 8. Chevrel phase compounds have been referred to as cluster sulfides and cluster sulfide oxides. The present catalysts are used in the conventional dry processes for the cracking of nitrogen oxides contained in exhaust gases. The catalysts may be used alone in a catalytic cracking method or in combination with a reducing gas, e.g. a hydrocarbon or carbon monoxide, as a reducing agent, in a selective contact reduction method.

## DETAILED DESCRIPTION OF THE INVENTION

The Chevrel phase compounds may be carried on an inert carrier, e.g. a conventional catalysts carrier, such as a ceramic heated to about 300°C. The exhaust gases containing nitrogen oxides are passed in contact with the Chevrel phase compounds carried on the surface of the carrier. As a result, nitrogen oxide (NO) is subject to catalytic cracking and decomposes to nitrogen ($N_2$) and oxygen ($O_2$), with the result that nitrogen oxides ($NO_x$) contained in the exhaust gases are removed.

Alternatively, the Chevrel phase compounds may likewise be carried on a carrier, as described above, but the exhaust gases containing nitrogen oxides are mixed with a reducing gas, such as a hydrocarbon, e.g. an olefine, paraffin, etc., carbon monoxide (CO) or the like and then passed in contact with the Chevrel phase compounds of the carrier. As a result, nitrogen oxides ($NO_x$) are subject to contact reduction and decompose to simple substances of nitrogen ($N_2$) and oxygen ($O_2$). The oxygen which is produced reacts with other substances in the exhaust gases, mainly to produce water or $CO_2$ and, as a result, the NO contained in the exhaust gases is removed.

Chevrel phase compounds were first synthesized by Chevrel and others in the early 1970s and reported in the Journal of Solid State Chemistry, 3, 515-519 (1971). Later, the structures and chemical formula of the series of the compounds were investigated by Yvon (K. Yvon, Solid State Commune 25, 327 (1978)) and Fischer (O. Fischer, Appl. Phys., 16, 1, (1978)) et al. Interstices formed by an array of $Mo_6 S_y$ clusters, e.g. $Mo_6 S_8$ clusters, are in an almost simple cubic configuration and are occupied by the third component, i.e. the metal M (sometimes more than one metal) so that Chevrel phase compounds have a construction which makes the bonds between the clusters quite stable.

Chevrel phase compounds generally have high electric conductivity. Some exhibit superconductivity at cryogenic temperatures. It is reported that, for instance, $Pb Mo_6 S_{8-y}$ (defined further below) has a relatively high superconductivity critical temperature (Tc = 14K) and a high upper critical magnetic field ($Hc_2$ = 600 KG). The Chevrel phase compounds used as catalysts in the present invention are species of the general formula of Chevrel phase compounds, which are $M_x Mo_6 S_{8-y}$ and/or $M_x Mo_6 S_{8-y} O_z$ and where M is ternary metals of which ionic radii are mostly less than 1Å, such as Cu, Fe, Co, Ni etc., S is sulfur (one of chalcogen) and O is oxygen. Usually, x is 1-5, 8-y is 7.4-8.5, and z is from 2 to 8. (The term "8-y") is the traditional term used in this art to specify the S substituent.) Chevrel phase compounds useful in the present invention form rhombohedral structures with

$\alpha \approx 95°$ ($\alpha$ is the rhombohedral angle). When M is, for example, copper, an excellent catalyst is provided and the copper Chevrel phase compounds have the general formula of $Cu_x Mo_6 S_{8-y}$, where x is 1-5 and 8-y is 7.4-8.5. The copper content range is wide and copper ions positioned in the cluster interstices move with ease. The electric conductivity is higher than $10^3$ S $\cdot$ cm$^{-1}$. Copper Chevrel phase compounds have attracted attentions in the recent years as a material for lithium and copper secondary battery electrode-active material and Josephson element and are therefore well known in the art.

Chevrel phase compounds whose M (metal) is nickel (Ni), iron (Fe), Chromium (Cr) and the like have a wide solid solution region. It is assumed that, with these compounds, changes in the sulfur composition is less than changes in the metal composition and that excess electrons in the constitution are used for covalent bonding or move around the constitution as a moving electron.

On the other hand, with nitrogen monoxide (NO) which is a principal component of nitrogen oxides ($NO_x$) in exhaust gases, the nitrogen has an odd number of electrons and, hence, has an unpaired electron on the antibonding pi ($\pi$ *) orbital. If one more electron is added to this pi ($\pi$ *) orbital, the bonding energy is reduced with the result that it becomes easier for nitrogen monoxide (NO) to decompose to nitrogen ($N_2$) and oxygen ($O_2$) .

The Chevrel phase compounds can be used as a donor of an electron to nitrogen monoxide (NO), since the Chevrel phase compounds easily give electrons to nitrogen monoxide (NO), with the result that decomposition to nitrogen ($N_2$) and oxygen ($O_2$) is, in theory, promoted.

Further, if a reducing agent, such as a hydrocarbon, carbon monoxide or the like, is used (the selective contact reduction method), it becomes very easy for the Chevrel phase compounds to lower the content of nitrogen monoxide in exhaust gases.

## EXAMPLE

The stability region of copper Chevrel phase sulfide has already been established by the inventors, as reported in Material Research, Bulletin, 18, 1311-1316 (1983). On the basis of this, an intermediate solid solution composition was synthesized, i.e. a $Cu_3 Mo_6 S_{7.85}$ and used as a catalyst in the above-noted processes.

Molybdenum sulfide ($MoS_2$), copper (Cu), and molybdenum (Mo) are mixed in the defined ratios. The mixture is placed in a quartz tube, evacuated and sealed in the quartz tube. The mixture is reacted at 1000°C for three days, and thereafter quickly cooled. The product is a powder and was identified as single phase Chevrel phase sulfide by X-ray diffraction.

The powdered Chevrel phase compound was ground with an agate pestle to smaller than 200 mesh and added to propylene glycol (PG) to make a dispersion with a concentration of $1g/cm^3$. The dispersion was painted on the surface of an alumina rod of 6 mm outside diameter and a length of 15 cm. Thereafter, the PG was evaporated and, thus, removed by subjecting the alumina rod to evacuation at 100°C for about 10 minutes.

## Nitrogen Oxides Removal Test (No.1)

Three alumina rods, as described above, forming one set were placed in a reactor tube. The total quantity of Chevrel phase sulfides disposed on the three alumina rods was 1.2 g.

Next, the reactor tube (24 mm inside diameter and 28 mm outside diameter) was heated and maintained at 300°C ± 10°C in an electric furnace.

A gaseous mixture of nitrogen ($N_2$) and nitrogen monoxide (NO) was used as the exhaust gases in this test. The mixed ratio was controlled by using a gas mixer. The total gas flow rate to the reactor tube was $3.7$ cm³/sec (linear velocity = 1 cm/sec).

The quantity of nitrogen monoxide (NO) which passed through the tube was measured by the glass measuring tube (made by Gastec).

The results of the test for lowering nitrogen oxides were as follows. When the nitrogen monoxide (NO) concentration at the inlet was 5800 ppm, the NO concentration at the outlet was 4000 ppm, down 31%. When the NO concentration at the inlet was 2000 ppm, the NO concentration at the outlet was 1300 ppm at the outlet, down 35%.

Next, the mixed gases were continually passed through the tube. After 30 minutes, the concentration was again measured, but the concentration drop was found to be unchanged. The function of Chevrel phase compounds as a superior catalyst even with continued use was thus confirmed.

## Nitrogen Oxides Removal Test (No. 2)

Under essentially the same conditions as described above, the concentration lowering nitrogen monoxide (NO) was again measured. Then, after allowing the mixed gases to pass through the tube for 30 minutes, the concentration lowering was again measured after introducing a hydrocarbon reducing gas into the mixture of gases (mixed lower olefin gas). The same test was also conducted when the mixture of gases contained, instead of the hydrocarbon, each of carbon monoxide, ammonia and urea.

As a result, it was found that, with use of this selective contact reduction method, NO was lowered at almost the same rate as with the catalytic cracking method of test (No. 1 above).

NO was also lowered at almost the same rate when the mixed gases were continuously passed through the tube. Thus, it was confirmed that the catalytic activity is maintained over a long time period.

## Chevrel Phase Compounds Stability Test

It is known that Chevrel phase compounds are stable in air at temperatures up to 360°C. The present test (heating to the designated temperature in the gases described) shows that the compounds are stable in hydrogen at temperatures up to about 730°C and stable in sulfurous acid gas ($SO_2$) at temperatures up to about 450°C.

These tests show that the Chevrel phase compounds, i.e. ternary molybdenum sulfide ($M_x Mo_6 S_{8-y}$ and $M_x Mo_6 S_{8-y} O_z$), as defined above, are stable and effectively active in corrosive gases, such as sulfurous acid gas, and in reduction gases containing hydrogen and hydrocarbon. It was found that the Chevrel phase compounds are unparalleled epochal catalysts for lowering nitrogen oxides ($NO_x$).

It is to be understood that metal M of Chevrel phase compounds is not limited to one kind of metal but can be more than one kind of metal. Also, the chalcogen S of the Chevrel phase compounds may be partially substituted by oxygen. The chalcogen is not limited to sulfur; Se, Te and Po may also be used.

Thus, as can be seen from the above, the Chevrel phase compounds are very useful catalysts, capable of substantially lowering NO in exhaust gases over a long time period, and even if the exhaust gases contain large amounts of soot, oxygen, and corrosive gases such as sulfurous acid gas ($SO_2$).

The Chevrel phase compounds can stably and effectively lower nitrogen oxides ($NO_x$) by either the catalytic cracking method or the selective contact reduction method and, thus, efficiently remove $NO_x$ even in corrosive gases, such as sulfurous acid gas, as well as in air or oxygen, and even when the reduction gases containing hydrogen, hydrocarbon, carbon monoxide and the like.

Further, since Chevrel phase compounds are very stable substances, as shown above, it is very easy to operate processes using these compounds as catalysts and operationally maintain associated nitrogen oxides removal apparatus, with the result that the costs of treating exhaust gases can be substantially lowered.

Thus, the conventional dry methods for removing nitrogen oxides can now be stably and effectively operated such as to subject nitrogen oxides to catalytic cracking and selective contact reduction in corrosive gases such as sulfurous acid gas, or in the air and oxygen. Further, the present invention exhibits a stable, high NO removal rate over a long time period and, hence, presents an unparalleled method for lowering nitrogen oxides and has a superior practical utility.

As described above, the present invention, thus, provides new catalysts for use in the known and conventional dry methods for reducing nitrogen oxides in exhaust gases, especially the conventional catalytic cracking methods and the conventional selective contact reduction methods. These methods are well known to the art and need not be described in any detail herein for sake of conciseness. However, very briefly, both methods rely on contacting the exhaust being treated with a catalyst for reduction or removal of nitrogen oxides. In the catalytic cracking method, this contact is in air or at least an oxygen containing gas. In the selective contact reduction method, this contact is in the present of a reducing gas. The ratio of exhaust gas to oxygen (or air equivalent) or reducing gas is not critical and may vary widely, depending on the specific exhaust being treated. This ratio is normally determined empirically with a particular exhaust (bearing in mind that the exhausts vary widely and may also vary from time-to-time) and a particular catalyst, simply by increasing the ratio until favorable $NO_{(x)}$ reduction is achieved. Similarly, the temperature of the processes can vary widely, and, again, the appropriate temperatures are usually empirically determined. However, generally speaking, the temperatures usually fall between 100°C and 750°C, and more often between 150°C and 450°C. Likewise, the ratio of exhaust and air or reducing gas to catalysts is not critical, and it is only necessary to adjust the flow rate of the exhaust and air or reducing gas for any particular catalysts amount or disposition. Likewise, the carrier for the catalyst is not critical and any of the conventional inert carriers may be used, e.g. ceramic carriers, clay carriers, alumina carriers, earth carriers and the like. The amount of catalyst on the carrier is also not critical and less catalyst on more carrier, rather than vice versa, only results in the need to use a larger volume of catalyst/carrier.

The catalyst/carrier is disposed in any of the conventional apparatus for contacting the exhaust gases with the catalyst/carrier, e.g. both lateral and vertical contact towers. The towers may be heated or unheated, depending on the temperature of the exhaust gases.

In the selective contact reduction method, the particular reducing gas is not critical and any of the conventional reducing gases may be used, e.g. alkanes and olefins of 2-20 carbon atoms. The ratio of reducing gas to exhaust gas is not critical, and only a reducing condition is required.

It is also not necessary herein to describe in detail the Chevrel phase compounds used as the present catalysts, beyond that described above, since these compounds are well known to the art. However, it should be understood the present catalysts are species of this general formula, $M_x Mo_6 S_{8-y}$ and/or $M_x Mo_6 S_{8-y} O_z$, where M is a metal and plural numbers of metals of which ionic radii are less than 1Å, S is chalcogen and O is oxygen. Also, x is 1-5, 8-y is 7.4 to 8.5 and z is from 2 to 8. The metals may be chosen from a wide variety of metals, e.g. Ni, Co, Fe, Cr, Mn, Cu, Mg and Zn, among others. Usually, the structure of these Chevrel phase compounds is indexed by rhombohedral with $\alpha \approx 95°$. However, as noted above, the preferred metal is Cu, since Cu provides a very effective, long-life catalysts that is expensive to produce.

## Claims

1. In a method for lowering the nitrogen oxides content of an exhaust gas by the catalytic cracking method or the selective contact reduction method, where the exhaust gas is contacted with a catalyst in the present of oxygen or a reducing gas, the improvement wherein the catalyst is a Chevrel phase compound having the formula:
$$M_x Mo_6 S_{8-y} \text{ and } M_x Mo_6 S_{8-y} O_z$$
where M is a metal, S is chalcogen, O is oxygen, x is 1-5, 8-y is 7. 4 to 8. 5, and z is from 2 to 8.

2. The method of claim 1 wherein M is more than one metal.

3. The method of claim 1 wherein S is partially substituted by oxygen.

4. The method of claim 1 wherein the catalyst is disposed on a carrier.

5. The method of claim 4 wherein the carrier is a ceramic carrier.

6. The method of claim 5 wherein the carrier is heated to a temperature between 100°C and 350°C.

7. The method of claim 5 wherein the exhaust gas passes over the surface of the carrier carrying the catalyst.

8. The method of claim 1 wherein the reducing gas is a hydrocarbon, carbon monoxide, ammonia or urea.

9. The method of claim 1 wherein the catalyst is a mixture of said Chevrel phase compounds.

**European Patent Office**

## EUROPEAN SEARCH REPORT

Application Number

EP 91 30 6749

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | US-A-4 560 470 (McCARTY et al.) <br> * Column 5, lines 17-39; claims 1,2,8 * <br> --- | 1,2,4,5 ,9 | B 01 D 53/36 <br> B 01 J 27/051 <br> B 01 J 23/00 |
| Y | EP-A-0 292 310 (BABCOCK-HITACHI K.K.) <br> * Page 2, lines 24-28; page 2, line 62 - page 3, line 5; page 3, lines 16-22; claims 1,4 * | 1,2,4,5 ,9 | |
| A | --- | 3,7,8 | |
| A | EP-A-0 376 025 (DEGUSSA AG) <br> * Claims 1,3,11,12,14,16,17 * <br> --- | 1-5,7-9 | |
| A | EP-A-0 362 960 (SAKAI CHEMICAL IND. CO., LTD) <br> * Page 3, lines 24-27,39-44; claims * <br> --- | 1-5,7-9 | |
| A,P | EP-A-0 382 644 (CENTRE NATIONAL DE LA RECHERCHE SCIENTIFIQUE) <br> * Claims 1,14,17 * <br> ----- | 1-5,7-9 | |
| | | | **TECHNICAL FIELDS SEARCHED (Int. Cl.5)** <br><br> B 01 D <br> B 01 J |

The present search report has been drawn up for all claims

| Place of search | Date of completion of the search | Examiner |
|---|---|---|
| THE HAGUE | 30-10-1991 | EIJKENBOOM A.F. |

EPO FORM 1503 03.82 (P0401)